# EUROPÄISCHE PATENTSCHRIFT

(11) **EP 0 902 548 B1**
(45) Veröffentlichungstag und Bekanntmachung des Hinweises auf die Patenterteilung: **14.11.2007**
(21) Anmeldenummer: 98105684.9
(22) Anmeldetag: 28.03.1998
(51) Int. Cl.: H04B 1/08, H04B 1/38

(54) **Rundfunkempfänger**
Broadcast receiver
Récepteur de radiodiffusion

(30) Priorität: 10.09.1997 DE 19739636
(43) Veröffentlichungstag der Anmeldung: 17.03.1999
(73) Patentinhaber: ROBERT BOSCH GMBH, 70442 Stuttgart (DE)
(72) Erfinder: Kirchhoff, Karsten, 31196 Sehlem (DE); Black, Karl-Heinz, 3119 Hildesheim (DE); Fricke, Walter, 31162 Bad Salzdetfurth (DE); Arndt, Rudolf, 31177 Harsum (DE)

(56) Entgegenhaltungen:
- EP-A- 0 276 403
- EP-A- 0 556 970
- GB-A- 2 264 613
- "DETACHABLE VEHICLE RADIO/TAPE/CD CONTROL PLATE IN A COMBINATION WITH CELLULAR TELEPHONE" RESEARCH DISCLOSURE, KENNETH MASON PUBLICATIONS, HAMPSHIRE, GB, Nr. 396, 1. April 1997 (1997-04-01), Seite 262 XP000702446 ISSN: 0374-4353

## Beschreibung

### Stand der Technik

Die Erfindung geht von einem Rundfunkempfänger nach der Gattung des Hauptanspruchs aus.

Aus der DE 33 44 071 A1 ist bereits ein Rundfunkgerät bekannt, das eine angelenkte Abdeckplatte aufweist, die vor die Gerätefront des Rundfunkgerätes geschwenkt werden kann.

Aus dem Blaupunkt-Katalog "Mobile Audiosysteme '95/'96" ist beispielsweise das Blaupunkt-Autoradio "Atlanta RD105" bekannt, das an der Gerätefront eine Chipkartenaufnahme aufweist, wobei die Chipkarte senkrecht zur Gerätefront eingeführt wird.

### Vorteile der Erfindung

Der erfindungsgemäße Rundfunkempfänger mit den Merkmalen des Hauptanspruchs hat demgegenüber den Vorteil, daß aufgrund der Anordnung der Ausnehmung zwischen der Abdeckplatte und der Gerätefront eine Möglichkeit zur Überprüfung einer Zugangsberechtigung des Benutzers gegeben ist, die keine Einschränkungen im Design des Rundfunkempfängers durch die Ausnehmung zur Folge hat, da diese bei betriebsbereitem Rundfunkempfänger von außen nicht sichtbar ist.

Ein weiterer Vorteil besteht darin, daß die Gerätefront für die Zuführung einer Chipkarte nicht durchbrochen werden muß, da eine Chipkarteneingabe senkrecht zur Gerätefront nicht erforderlich ist. Durch die Anordnung der Ausnehmung zwischen der Abdeckplatte und der Gerätefront läßt sich ein einfacherer, weniger Herstellungsaufwand und somit preisgünstigerer Aufbau des Rundfunkempfängers realisieren.

Durch die in den Unteransprüchen aufgeführten Maßnahmen sind vorteilhafte Weiterbildungen und Verbesserungen des im Hauptanspruch angegebenen Rundfunkempfängers möglich.

Ein Vorteil besteht darin, daß in der Ausnehmung ein Schieber vorgesehen ist, mit dem eine in die Ausnehmung eingelegte Chipkarte in eine Endposition zur Kontaktierung mit den Kontakten verschiebbar ist. Auf diese Weise ist eine Kontaktierung entsprechender Kontaktflächen des Speicherchips einer in die Ausnehmung eingelegten Chipkarte auch bei von der Gerätefront weggeschwenkter Abdeckplatte möglich, so daß für den Datenaustausch zwischen der Chipkarte und dem Rundfunkempfänger ein größerer Zeitraum zur Verfügung steht.

Ein weiterer Vorteil besteht darin, daß der Schieber bei Erreichen der Endposition rastet. Auf diese Weise wird die Chipkarte stabil und vor Herausfallen gesichert in der Ausnehmung gehalten.

Ein weiterer Vorteil besteht darin, daß bei Erreichen der Endposition durch die Chipkarte eine Betätigung eines Endschalters erfolgt. Auf diese Weise besteht eine Kontrolle darüber, ob die Chipkarte richtig in die Ausnehmung eingelegt ist.

Ein weiterer Vorteil besteht darin, daß die Kontaktierung der Kontaktflächen eines Speicherchips einer in die Chipkartenaufnahme eingelegten Chipkarte mit den Kontakten der ersten Seitenfläche dadurch erfolgt, daß die Chipkartenaufnahme bei an der Gerätefront anliegender Abdeckplatte gegen die erste Seitenfläche drückt, wobei die Chipkartenaufnahme im Bereich der Kontakte eine Öffnung aufweist. Auf diese Weise werden die Kontakte mechanisch nur bei an der Gerätefront anliegender Abdeckplatte durch eine in die Chipkartenaufnahme eingelegte Chipkarte beansprucht.

Besonders vorteilhaft ist es, daß bei von der Gerätefront weggeschwenkter Abdeckplatte die Chipkartenaufnahme von der ersten Seitenfläche weggeschwenkt ist. Auf diese Weise wird der Bedienkomfort für den Benutzer erhöht, da die Chipkartenaufnahme besser sichtbar und leichter zugänglich ist.

Ein weiterer Vorteil besteht auch darin, daß bei Einführung bzw. Entnahme der Chipkarte in bzw. aus der Chipkartenaufnahme keine Kontaktierung mit den Kontakten der ersten Seitenfläche und damit keine mechanische Beanspruchung dieser Kontakte erfolgt, da die Chipkartenaufnahme von der ersten Seitenfläche weggeschwenkt ist. Die Kontaktierung der Kontakte mit den Kontaktflächen eines Speicherchips einer in der Chipkartenaufnahme befindlichen Chipkarte erfolgt beim erfindungsgemäßen Rundfunkempfänger dadurch, daß beim Schwenken der Abdeckplatte vor die Gerätefront die Chipkartenaufnahme mit der Chipkarte gegen die ersten Seitenfläche gedrückt wird. Die mechanische Beanspruchung der Kontakte und auch der Kontaktflächen des Speicherchips ist hierbei geringer als bei einer Kontaktierung, bei der die Kontaktflächen über die Kontakte geschoben werden, so daß Reibung auftritt. Somit ergibt sich für die Kontakte und die Kontaktflächen des Speicherchips beim erfindungsgemäßen Rundfunkempfänger ein geringerer Verschleiß.

Ein weiterer Vorteil besteht darin, daß eine Tiefe der Ausnehmung mindestens einer Höhe der Chipkartenaufnahme entspricht. Auf diese Weise läßt sich die Chipkartenaufnahme besonders einfach, aufwandsarm und platzsparend in der Abdeckplatte vollständig versenken, so daß das Design des Rundfunkempfängers nicht beeinträchtigt wird.

Vorteilhaft ist weiterhin, daß der Rundfunkempfänger eine Abspielvorrichtung und einen Schacht für Aufzeichnungsträger umfaßt und daß die Gerätefront eine Einführungsöffnung für den Schacht aufweist. Auf diese Weise kann die Einführungsöffnung für den Schacht bei an der Gerätefront anliegender Abdeckplatte abgedeckt werden, so daß das Eindringen von Schmutz in den Schacht verhindert wird und das Design des Rundfunkempfängers nicht durch die Einführungsöffnung eingeschränkt wird bzw. beeinträchtigt wird.

Ein weiterer Vorteil besteht darin, daß eine zweite, der ersten Seitenfläche gegenüberliegende und der Gerätefront abgewandte Seitenfläche Bedienelemente und/oder eine Anzeigevorrichtung umfaßt. Auf diese Weise erfüllt die Abdeckplatte zusätzlich zum Schutz der Gerätefront vor Umwelteinflüssen und der Unterbringung der Chipkartenaufnahme zusätzlich die Funktion einer Bedienvorrichtung, wobei für den Fall, daß die Abdeckplatte auch eine Einführungsöffnung für den Schacht einer Abspielvorrichtung an der Gerätefront abdeckt, zusätzlicher Platz für die Unterbringung von Bedienelementen bzw. der Anzeigevorrichtung an der Abdeckplatte zur Verfügung steht, so daß die Bedienelemente und/oder die Anzeigevorrichtung für den Benutzer übersichtlicher am Rundfunkempfänger angeordnet werden kann.

### Zeichnung

Ausführungsbeispiele der Erfindung sind in der Zeichnung dargestellt und in der nachfolgenden Beschreibung näher erläutert. Es zeigen Figur 1 eine perspektivische Ansicht einer von der Gerätefront eines Rundfunkempfängers weggeklappten Abdeckplatte gemäß einem ersten Ausführungsbeispiel, Figur 2 die Vorderansicht der Abdeckplatte, Figur 3 einen Horizontalschnitt durch den Rundfunkempfänger bei an der Gerätefront anliegender Abdeckplatte, Figur 4 eine Federverbindung zwischen einer Chipkartenaufnahme und einer Seitenfläche der Abdeckplatte des Rundfunkempfängers, Figur 5 eine perspektivische Ansicht der von der Gerätefront des Rundfunkempfängers weggeklappten Abdeckplatte gemäß einem zweiten Ausführungsbeispiel und Figur 6 die Rückansicht der Abdeckplatte für das zweite Ausführungsbeispiel.

### Beschreibung der Ausführungsbeispiele

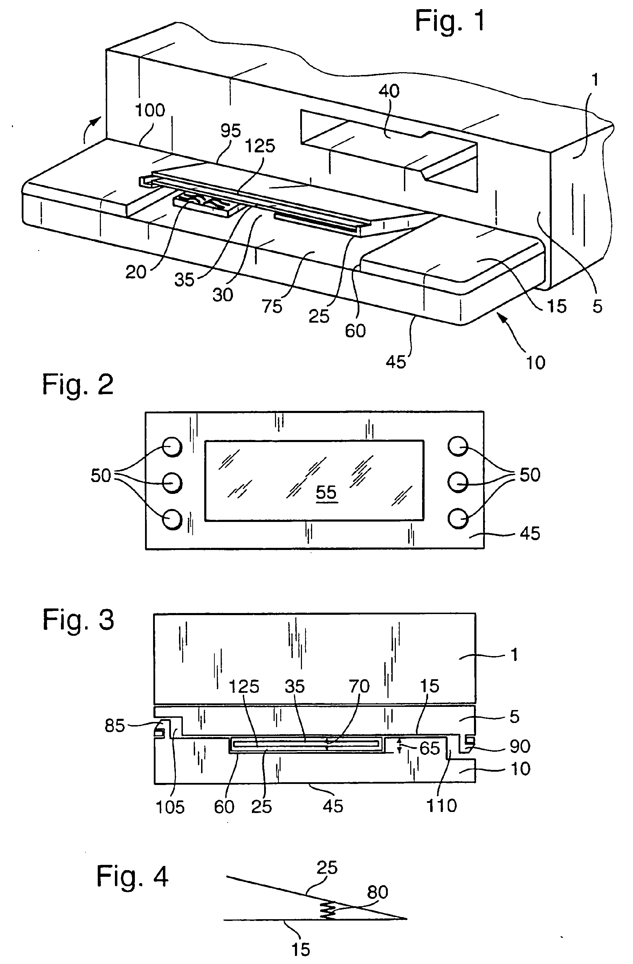

In Figur 1 kennzeichnet 1 einen als Autoradio ausgebildeten Rundfunkempfänger. Das Autoradio 1 umfaßt eine in Figur 1 nicht dargestellte Abspielvorrichtung und einen Schacht für von der Abspielvorrichtung abzuspielende Aufzeichnungsträger. Das Autoradio weist eine Gerätefront 5 mit einer Einführungsöffnung 40 für den Schacht auf. An der Gerätefront 5 ist eine Abdeckplatte 10 angeordnet, die vor die Gerätefront 5 schwenkbar ist. Der Schwenkmechanismus ist in Figur 1 nicht dargestellt und erfolgt in einer dem Fachmann bekannten Weise. In Figur 1 ist die Abdeckplatte 10 in einem aufgeklappten Zustand dargestellt, so daß sie die Gerätefront mit der Einführungsöffnung 40 freigibt. Die Abdeckplatte 10 kann in Richtung des in Figur 1 dargestellten Pfeiles vor die Gerätefront 5 zur Abdeckung der Gerätefront 5 mit der Einführungsöffnung 40 geschwenkt werden, so daß sie an der Gerätefront 5 anliegt und die Gerätefront 5 mit der Einführungsöffnung 40 vollständig abdeckt. Auf diese Weise wird der Schacht und ein gegebenenfalls im Schacht befindlicher Aufzeichnungsträger vor Umwelteinflüssen und Verschmutzung geschützt. Eine erste der Gerätefront 5 zugewandte Seitenfläche 15 der Abdeckplatte 10 weist eine Ausnehmung 60 auf, in der eine Leiterplatte 75 mit von der Leiterplatte 75 hervorragenden Kontakten 20 angeordnet ist. An der ersten Seitenfläche 15 ist eine Chipkartenaufnahme 25 schwenkbar im Bereich der Ausnehmung 60 angeordnet und weist im Bereich der Kontakte 20 eine Öffnung 30 auf. Eine Schwenkachse 95 der Chipkartenaufnahme 25 liegt dabei parallel zu einer Schwenkachse 100 der Abdeckplatte 10 an dem der Gerätefront 5 zugewandten Ende der Seitenfläche 15. An ihrer der Schwenkachse 95 gegenüberliegenden Seite weist die Chipkartenaufnahme 25 einen Einführungs- und Entnahmeschlitz 125 zur Einführung bzw. Entnahme einer Chipkarte 35 auf. Der Einführungs- und Entnahmeschlitz 125 verläuft dabei etwa parallel zur Schwenkachse 95. Bei von der Gerätefront 5 weggeschwenkter Abdeckplatte 10 ist der Einführungs- und Entnahmeschlitz 125 dem Benutzer zugewandt. Bei von der Gerätefront 5 weggeschwenkter Abdeckplatte 10 wird die Chipkartenaufnahme 25 von der Abdeckplatte 10 in Richtung zur Gerätefront 5 mittels mindestens eines Federelementes 80 weggedrückt, wie auch mittels Figur 4 verdeutlicht wird. Auf diese Weise wird das Einlegen einer Chipkarte 35 in die Chipkartenaufnahme 25 bei von der Gerätefront 5 weggeschwenkter Abdeckplatte 10 für den Benutzer erleichtert. Außerdem findet beim Einschieben der Chipkarte 35 in die Chipkartenaufnahme 25 auf diese Weise keine mechanische Beanspruchung der Kontakte 20 statt.

In Figur 3 ist ein Horizontalschnitt durch das Autoradio 1 mit an der Gerätefront 5 anliegender Abdeckplatte 10 dargestellt, wobei gleiche Bezugszeichen gleiche Elemente kennzeichnen wie in den Figuren 1 und 2. Da es sich bei Figur 3 um eine Draufsicht handelt, ist auch der Einführungs- und Entnahmeschlitz 125 erkennbar. Dabei wird die Chipkartenaufnahme 25 so gegen die erste Seitenfläche 15 gedrückt, daß Kontaktflächen eines Speicherchips der in die Chipkartenaufnahme 25 eingelegten Chipkarte 35 durch die Öffnung 30 mit den von der Leiterplatte 75 hervorgehobenen Kontakten 20 kontaktieren. Dabei ist die Chipkartenaufnahme 25 in die Ausnehmung 60 eingelegt, wobei eine Tiefe 65 der Ausnehmung 60 mindestens einer Höhe 70 der Chipkartenaufnahme 25 entspricht, so daß die erste Seitenfläche 15 auch zur Anlage mit der Gerätefront 5 kommen kann. Im Horizontalschnitt der Figur 3 ist auch erkennbar, daß an der Abdeckplatte 10 ein erstes Rastelement 85 angeordnet ist, das in einer ersten Rastöffnung 105 der Gerätefront 5 lösbar rastet. Dazu ist das erste Rastelement 85 seitlich an der Abdeckplatte 10 angeordnet, so daß es beispielsweise mit dem Fingernagel des Benutzers in die erste Rastöffnung 105 zum Lösen der Rastverbindung eingedrückt werden kann. Es können auch ein oder mehrere weitere Rastelemente seitlich an der Abdeckplatte 10 vorgesehen sein, die mit entsprechenden Rastöffnungen der Gerätefront 5 korrespondieren. Alternativ oder wie in Figur 3 dargestellt zusätzlich kann auch die Gerätefront 5 ein zweites Rastelement 90 aufweisen, das bei an der Gerätefront 5 anliegender Abdeckplatte 10 in einer zweiten Rastöffnung 110 der Abdeckplatte 10 lösbar rastet. Dazu ist das zweite Rastelement 90 ebenfalls seitlich an der Gerätefront 5 angeordnet, so daß es beispielsweise mit einem Fingernagel des Benutzers in die zweite Rastöffnung 110 zum Öffnen der Rastverbindung eingedrückt werden kann. Auch die Gerätefront 5 kann ein oder mehrere weitere seitlich angeordnete Rastelemente aufweisen, die mit entsprechenden Rastöffnungen der Abdeckplatte 10 korrespondieren.

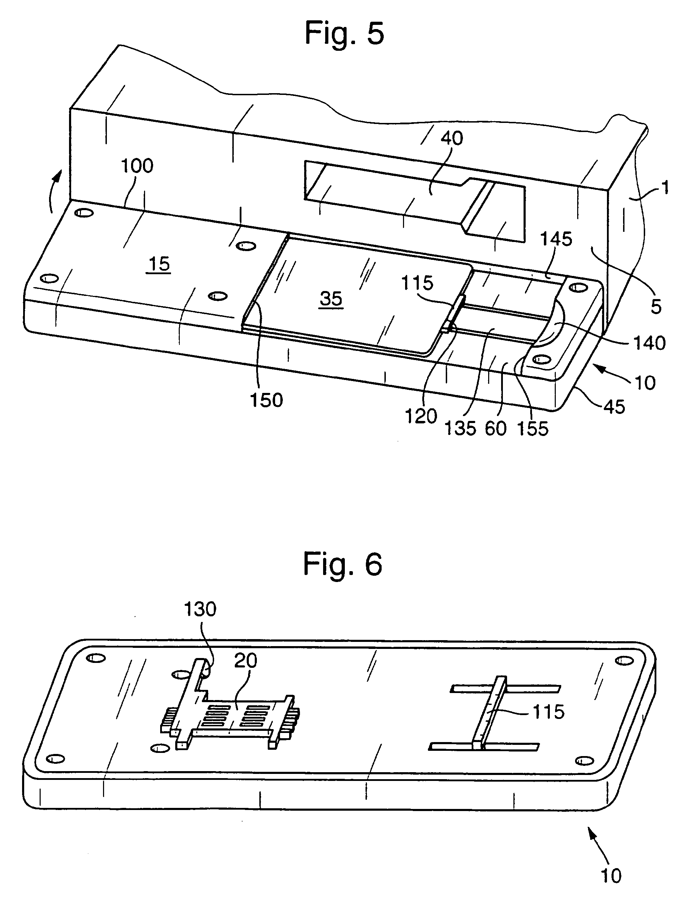

In Figur 5 ist ein weiteres Ausführungsbeispiel eines erfindungsgemäßen, als Autoradio ausgebildeten Rundfunkempfängers 1 dargestellt. Dabei kennzeichnen gleiche Bezugszeichen gleiche Elemente wie in den vorangehenden Figuren. Im Gegensatz zum Ausführungsbeispiel gemäß Figur 1 ist dabei gemäß Figur 5 keine Chipkartenaufnahme 25 in der Ausnehmung 60 vorgesehen. Hingegen weist die Ausnehmung 60 einen Schieber 115 auf, der in einer Richtung parallel zur Schwenkachse 100 der Abdeckplatte 10 auf einem Schiebeweg 135 verschiebbar ist. Die Ausnehmung 60 gemäß dem Ausführungsbeispiel nach Figur 5 weist dabei eine um den Schiebeweg 135 größere Länge als die Chipkarte 35 auf. Der Schieber 115 ist gemäß Figur 5 als Balken ausgebildet, der senkrecht zum Schiebeweg 135 angeordnet ist. Die Höhe des Balkens 115 ist dabei nicht größer als die Tiefe der Ausnehmung 60, so daß bei an der Gerätefront 5 anliegender Abdeckplatte 10 die erste Seitenfläche 15 flächig an der Gerätefront 5 anliegt. Über den Schieber 115 kann eine in die Ausnehmung 60 eingelegte Chipkarte 35 in eine Endposition 120 verschoben werden, in der sie zur Anlage an einer dem Schieber 115 gegenüberliegenden ersten Querkante 150 der Ausnehmung 60 kommt und über die Kontaktflächen ihres Speicherchips mit den Kontakten 20 kontaktiert. Die Kontaktierung erfolgt bei dem genannten Schiebevorgang schleifend. Dazu wird der Schieber 115 mit der am Schieber 115 anliegenden Chipkarte 35 auf dem Schiebeweg 135 in Richtung zu den Kontakten 20 bis zur Endposition 120 verschoben. Dabei rastet der Schieber 115 in der Endposition 120 beispielsweise federnd, wodurch die Chipkarte 35 stabil in der Ausnehmung 60 gehalten wird. Durch Druck gegen eine entsprechende Federkraft kann der Schieber 115 aus seiner Rast gelöst werden, wobei zur Realisierung eines Entnahmevorgangs für die Chipkarte 35 der Schieber 115 anschließend in entgegengesetzter Richtung von den Kontakten 20 weg verschoben wird. Gemäß dem Ausführungsbeispiel nach Figur 5 besteht somit eine Kontaktierung der Kontaktflächen des Speicherchips der Chipkarte 35 mit den Kontakten 20 auch schon bei von der Gerätefront 5 weggeschwenkter Abdeckplatte 10, so daß ein Datenaustausch zwischen der Chipkarte 35 und dem Autoradio 1 über einen größeren Zeitraum möglich ist.

Der Schiebeweg 135 reicht von der Endposition 120 bis zu einer der ersten Querkante 150 gegenüberliegenden zweiten Querkante 155 der Ausnehmung 60. Dabei weist die erste Seitenfläche 15 an der zweiten Querkante 155 gegebenenfalls eine Einbuchtung 140 gemäß Figur 5 auf, die einen verbesserten Zugang des Schiebers 115 für den Benutzer, beispielsweise mittels eines Fingers ermöglicht.

In Figur 6 ist eine Rückansicht der Abdeckplatte 10 dargestellt, bei der an der ersten Querkante 150 ein Endschalter 130 dargestellt ist, der durch eine anliegende Chipkarte 35 betätigt wird, so daß auf diese Weise eine Kontrollmöglichkeit über eine richtig in die Ausnahme 60 eingelegte Chipkarte 35 besteht. Dadurch kann beispielsweise ein Entriegelungsmechanismus eingeschaltet werden, der das Schwenken der Abdeckplatte 10 vor die Gerätefront 5 ermöglicht. Ansonsten sind in Figur 6 gleiche Elemente mit gleichen Bezugszeichen wie in den vorherigen Figuren gekennzeichnet, wobei der Schieber 115 in einer mittleren Position, das heißt nicht in der Endposition 120 dargestellt - ist. Auf der dem Endschalter 130 zugewandten Seite der Ausnehmung 60 sind in Figur 6 außerdem die Kontakte 20 dargestellt.

Gemäß Figur 5 wird die Chipkarte beim Verschieben in bzw. aus der Endposition 120 entlang einer Längskante 145 der Ausnehmung 60 geführt, so daß gewährleistet ist, daß die Kontaktflächen des Speicherchips der Chipkarte 35 auch mit den Kontakten 20 positionsgenau überlagern und gegenseitig kontaktieren können. Zur Kontrolle einer richtig in die Ausnehmung 60 eingelegten Chipkarte 35 ist daher der Endschalter 130 etwa im Bereich der Schwenkachse 100 der Abdeckplatte 10 anzuordnen, so daß für den Fall, daß die Chipkarte 35 nicht an der Längskante 145 der Ausnehmung 60 geführt wurde, der Endschalter 130 auch nicht betätigt wird und keine Entriegelung des Entriegelungsmechanismus erfolgt, da in diesem Fall die Kontaktflächen des Speicherchips der Chipkarte 35 nicht mit den Kontakten 20 überlagern und daher nicht mit ihnen kontaktieren. Der Endschalter 130 ist daher am besten in der aus der zur Anlage mit der Chipkarte 35 vorgesehenen ersten Querkante 150 und der Längskante 145 gebildeten Ecke der Ausnehmung 60 anzuordnen.

An einer zweiten, der ersten Seitenfläche 15 gegenüberliegenden und der Gerätefront 5 abgewandten Seitenfläche 45 können gemäß Figur 2 Bedienelemente 50 und/oder eine Anzeigevorrichtung 55 angeordnet sein. Durch die vor die Gerätefront 5 mit der Einführungsöffnung 40 schwenkbare Abdeckplatte 10 muß an der zweiten Seitenfläche 45 kein Platz für die Einführungsöffnung 40 vorgesehen werden, so daß für die Bedienelemente 50 und die Anzeigevorrichtung 55 mehr Platz zur Verfügung steht und dadurch die Übersichtlichkeit und der Bedienkomfort für den Benutzer erhöht werden.

Das erfindungsgemäße Autoradio 1 ermöglicht einen Diebstahlschutz mittels der Verwendung einer Zugangsberechtigungschipkarte, für deren Einführungsvorrichtung in das Autoradio 1 keine Einschränkungen im Design des Autoradios 1 hingenommen werden müssen, wobei zugleich ein einfacherer konstruktiver Aufbau des Autoradios 1 für die Realisierung des Einführungsmechanismus ermöglicht wird.

## Patentansprüche

1. Rundfunkempfänger (1), vorzugsweise Autoradio, mit einer Gerätefront (5) und einer vor die Gerätefront (5) schwenkbaren Abdeckplatte (10), **dadurch gekennzeichnet, daß** die Abdeckplatte (10) an einer ersten der Gerätefront (5) zugewandten Seitenfläche (15) eine Ausnehmung (60) zur Aufnahme einer Chipkarte (35) aufweist und daß im Bereich der Ausnehmung (60) Kontakte (20) zur Kontaktierung entsprechender Kontaktflächen eines Speicherchips einer in die Ausnehmung (60) einlegbaren Chipkarte (35) vorgesehen sind.

2. Rundfunkempfänger (1) nach Anspruch 1, **dadurch gekennzeichnet, daß** in der Ausnehmung (60) ein Schieber (115) vorgesehen ist, mit dem eine in die Ausnehmung (60) eingelegte Chipkarte (35) in eine Endposition (120) zur Kontaktierung mit den Kontakten (20) verschiebbar ist.

3. Rundfunkempfänger (1) nach Anspruch 2, **dadurch gekennzeichnet, daß** der Schieber bei Erreichen der Endposition (120) rastet.

4. Rundfunkempfänger (1) nach Anspruch 2 oder 3, **dadurch gekennzeichnet, daß** bei Erreichen der Endposition (120) durch die Chipkarte (35) eine Betätigung eines Endschalters (130) erfolgt.

5. Rundfunkempfänger nach Anspruch 1, **dadurch gekennzeichnet, daß** eine Chipkartenaufnahme (25) schwenkbar an der ersten Seitenfläche (15) so angeordnet ist, daß sie in die Ausnehmung (60) einlegbar ist, daß die Chipkartenaufnahme (25) im Bereich der Kontakte (20) eine Öffnung (30) aufweist und daß bei an der Gerätefront (5) anliegender Abdeckplatte (10) die Chipkartenaufnahme (25) so gegen die erste Seitenfläche (15) drückt, daß die Kontaktflächen des Speicherchips einer in die Chipkartenaufnahme (25) eingelegter Chipkarte (35) mit den Kontakten (20) der ersten Seitenfläche (15) kontaktieren.

6. Rundfunkempfänger (1) nach Anspruch 5, **dadurch gekennzeichnet, daß** bei von der Gerätefront (5) weggeschwenkter Abdeckplatte (10) die Chipkartenaufnahme (25) von der ersten Seitenfläche (15) weggeschwenkt ist.

7. Rundfunkempfänger (1) nach Anspruch 5 oder 6, **dadurch gekennzeichnet, daß** die Chipkartenaufnahme einen Einführungs- und Entnahmeschlitz (125) für eine Chipkarte (35) aufweist.

8. Rundfunkempfänger (1) nach Anspruch 5, 6 oder 7, **dadurch gekennzeichnet, daß** eine Tiefe (65) der Ausnehmung (60) mindestens einer Höhe (70) der Chipkartenaufnahme (25) entspricht.

9. Rundfunkempfänger (1) nach einem der Ansprüche 5 bis 8, **dadurch gekennzeichnet, daß** mindestens ein Federelement (80) vorgesehen ist, das die Chipkartenaufnahme (25) im von der Gerätefront (5) weggeschwenkten Zustand der Abdeckplatte (10) von der Abdeckplatte (10) in Richtung zur Gerätefront (5) wegdrückt.

10. Rundfunkempfänger (1) nach einem der vorherigen Ansprüche, **dadurch gekennzeichnet, daß** der Rundfunkempfänger (1) eine Abspielvorrichtung und einen Schacht für Aufzeichnungsträger umfaßt und daß die Gerätefront (5) eine Einführungsöffnung (40) für den Schacht aufweist.

11. Rundfunkempfänger (1) nach einem der vorherigen Ansprüche, **dadurch gekennzeichnet, daß** eine zweite, der ersten Seitenfläche (15) gegenüberliegende und der Gerätefront (5) abgewandte Seitenfläche (45) Bedienelemente (50) und/oder eine Anzeigevorrichtung (55) umfaßt.

12. Rundfunkempfänger (1) nach einem der vorherigen Ansprüche, **dadurch gekennzeichnet, daß** an der ersten Seitenfläche (15) eine Leiterplatte (75) angeordnet ist, auf der die Kontakte (20) angeordnet sind, wobei die Kontakte (20) von der Leiterplatte (75) hervorragen.

13. Rundfunkempfänger (1) nach einem der vorherigen Ansprüche, **dadurch gekennzeichnet, daß** an der Abdeckplatte (10) und/oder der Gerätefront (5) mindestens ein Rastelement (85, 90) vorgesehen ist, das bei an der Gerätefront (5) anliegender Abdeckplatte (10) in der Gerätefront (5) bzw. der Abdeckplatte (10) lösbar rastet.

## Claims

1. Broadcast radio receiver (1), preferably a car radio, having an appliance front (5) and a cover plate (10), which can pivot in front of the appliance front (5), **characterized in that** the cover plate (10) has a recess (60) on a first lateral face (15) facing the appliance front (5) for the purpose of holding a chip card (35), and **in that** the region of the recess (60) contains contacts (20) for making contact with corresponding contact faces on a memory chip in a chip card (35) which can be inserted into the recess (60).

2. Broadcast radio receiver (1) according to Claim 1, **characterized in that** the recess (60) contains a slider (115) which can be used to displace a chip card (35) inserted into the recess (60) into a final position (120) for the purpose of making contact by means of the contacts (20).

3. Broadcast radio receiver (1) according to Claim 2, **characterized in that** the slider latches when the final position (120) is reached.

4. Broadcast radio receiver (1) according to Claim 2 or 3, **characterized in that** when the chip card (35) reaches the final position (120) a limit switch (130) is operated.

5. Broadcast radio receiver according to Claim 1, **characterized in that** a chip card holder (25) is arranged so as to be able to pivot on the first lateral face (15) such that it can be inserted into the recess (60), **in that** the chip card holder (25) has an opening (30) in the region of the contacts (20), and **in that** when the cover plate (10) is resting against the appliance front (5) the chip card holder (25) presses against the first lateral face (15) such that the contact faces of the memory chip in a chip card (35) inserted into the chip card holder (25) make contact by means of the contacts (20) on the first lateral face (15).

6. Broadcast radio receiver (1) according to Claim 5, **characterized in that** when the cover plate (10) is pivoted away from the appliance front (5) the chip card holder (25) is pivoted away from the first lateral face (15).

7. Broadcast radio receiver (1) according to Claim 5 or 6, **characterized in that** the chip card holder has an insertion and removal slot (125) for a chip card (135).

8. Broadcast radio receiver (1) according to Claim 5, 6 or 7, **characterized in that** a depth (65) of the recess (60) corresponds at least to a height (17) of the chip card holder (25).

9. Broadcast radio receiver (1) according to one of Claims 5 to 8, **characterized in that** at least one spring element (80) is provided which presses the chip card holder (25) from the cover plate (10) towards the appliance front (5) when the cover plate (10) is in the state in which it is pivoted away from the appliance front (25).

10. Broadcast radio receiver (1) according to one of the preceding claims, **characterized in that** the broadcast radio receiver (1) comprises a playback apparatus and a slot for recording media, and **in that** the appliance front (5) has an insertion opening (40) for the slot.

11. Broadcast radio receiver (1) according to one of the preceding claims, **characterized in that** a second lateral face (45), which is situated opposite the first lateral face (15) and which is remote from the appliance front (5), comprises operator control elements (50) and/or a display apparatus (55).

12. Broadcast radio receiver (1) according to one of the preceding claims, **characterized in that** the first lateral face (15) has a printed circuit board (75) arranged on it which holds the contacts (20), the contacts (20) protruding from the printed circuit board (75).

13. Broadcast radio receiver (1) according to one of the preceding claims, **characterized in that** the cover plate (10) and/or the appliance front (5) has/have at least one latch element (85, 90) provided on it/them which latches releasably in the appliance front (5) or the cover plate (10) when the cover plate (10) is bearing against the appliance front (5).

## Revendications

1. Récepteur de radiodiffusion, de préférence autoradio, comportant un appareil frontal (5) et une plaque de couverture (10) pivotant devant l'appareil frontal (5),
**caractérisé en ce que**
la plaque de couverture (10) comporte sur un premier côté (15) tourné vers l'appareil frontal (5), une cavité (60) pour recevoir une carte à puce (35) et
au niveau de la cavité (60) des contacts (20) entrent en contact avec des surfaces de contact correspondantes d'une puce de mémoire d'une carte à puce (35) placée dans la cavité (60).

2. Appareil de radiodiffusion (1) selon la revendication 1,
**caractérisé en ce qu'**
un coulisseau (15) est prévu dans la cavité (60), permettant de coulisser la carte à puce (35) placée dans la cavité (60), jusque dans une position de fin de course (120) pour entrer en contact avec les contacts (20).

3. Récepteur radiophonique (1) selon la revendication 2,
**caractérisé en ce que**
le coulisseau s'accroche lorsqu'il atteint la position de fin de course (120).

4. Récepteur radiophonique (1) selon la revendication 2 ou 3,
**caractérisé en ce que**
lorsque la carte à puce (35) atteint la position de fin de course, un commutateur de fin de course (130) est actionné.

5. Récepteur radiophonique (1) selon la revendication 1,
**caractérisé par**
un logement de carte à puce (25) prévu de manière pivotante dans un premier côté (15),
elle peut être placée dans la cavité (60),
le logement de carte à puce (25) présente une ouverture (30) au niveau des contacts (20) et
lorsque la plaque de couverture (10) est appliquée contre l'appareil frontal (5), le logement de carte à puce (25) pousse contre le premier côté (15) pour que les surfaces de contact de la puce de mémoire d'une carte à puce (35) placée dans le logement de carte (25) viennent en contact avec les contacts (20) du premier côté (15).

6. Récepteur radiophonique (1) selon la revendication 5,
**caractérisé en ce que**
pour une plaque de couverture (10) qui peut basculer pour s'écarter de la plaque frontale (5), le logement de carte à puce (25) s'écarte par basculement du premier côté (15).

7. Récepteur radiophonique (1) selon la revendication 5 ou 6,
**caractérisé en ce que**
le logement de carte à puce comporte une fente d'introduction et d'extraction (125) pour une carte à puce (35).

8. Récepteur radiophonique (1) selon les revendications 5, 6, 7,
**caractérisé en ce que**
la profondeur (65) de la cavité (60) correspond au moins à la hauteur (70) du logement de carte (25).

9. Récepteur radiophonique (1) selon l'une des revendications 5 à 8,
**caractérisé par**
au moins un élément de ressort (80) qui écarte le logement de carte à puce (25) lorsque la plaque de couverture est dans sa position écartée de l'appareil frontal (5) par rapport à la plaque de couverture (10) en direction de l'appareil frontal (5).

10. Récepteur radiophonique (1) selon l'une des revendications précédentes,
**caractérisé en ce qu'**
il comporte un dispositif de lecture et un logement pour un support d'enregistrement et l'appareil frontal (5) comporte une ouverture d'introduction (40) pour le logement.

11. Récepteur radiophonique (1) selon l'une des revendications précédentes,
**caractérisé en ce que**
le second côté (45), à l'opposé du premier côté (15) et de l'appareil frontal (5), comporte des éléments de commande (50) et/ou un dispositif d'affichage (55):

12. Récepteur radiophonique (1) selon l'une des revendications précédentes,
**caractérisé en ce que**
le premier côté (15) comporte une plaque de circuit (75) munie des contacts (20), ces contacts (20) étant en saillie par rapport à la plaque de circuit (75).

13. Récepteur radiophonique (1) selon l'une des revendications précédentes,
**caractérisé par**
au moins un élément d'encliquetage (85, 90) prévu sur la plaque de couverture (10) et/ou l'appareil frontal (5), et cet élément s'accroche de manière amovible dans l'appareil frontal (5) ou la plaque de couverture (10) lorsque la plaque de couverture (10) est appliquée contre l'appareil frontal (5).
